(19) Europäisches Patentamt
European Patent Office
Office européen des brevets

(11) **EP 3 259 294 B1**

(12) # EUROPÄISCHE PATENTSCHRIFT

(45) Veröffentlichungstag und Bekanntmachung des Hinweises auf die Patenterteilung:
**18.12.2019 Patentblatt 2019/51**

(21) Anmeldenummer: **16704675.4**

(22) Anmeldetag: **17.02.2016**

(51) Int Cl.:
*C08G 18/00* (2006.01)    *C08G 101/00* (2006.01)
*C08J 9/02* (2006.01)    *C08J 9/12* (2006.01)
*C08J 9/00* (2006.01)

(86) Internationale Anmeldenummer:
**PCT/EP2016/053378**

(87) Internationale Veröffentlichungsnummer:
**WO 2016/131878 (25.08.2016 Gazette 2016/34)**

(54) **HOCHTEMPERATURBESTÄNDIGE SCHAUMSTOFFE**

HIGH TEMPERATURE RESISTANT FOAMS

MOUSSES RÉSISTANTES AUX TEMPÉRATURES ÉLEVÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.02.2015 EP 15155919**

(43) Veröffentlichungstag der Anmeldung:
**27.12.2017 Patentblatt 2017/52**

(73) Patentinhaber:
• **Covestro Deutschland AG**
  **51373 Leverkusen (DE)**
• **BASF SE**
  **67056 Ludwigshafen (DE)**

(72) Erfinder:
• **HUPKA, Florian**
  **40589 Düsseldorf (DE)**
• **FRIEDRICHS, Wolfgang**
  **50933 Köln (DE)**
• **HAGEN, Torsten**
  **45257 Essen (DE)**
• **NIESTEN, Meike**
  **51063 Köln (DE)**
• **KRÄMER, Roland**
  **200120 Pudong**
  **Shanghai (CN)**
• **MENON, Sindhu**
  **200135 Pudong**
  **Shanghai (CN)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
WO-A1-2012/080185    DE-A1- 2 551 631

**Beschreibung**

Die vorliegende Erfindung betrifft hochtemperaturbeständige Schaumstoffe und deren Herstellung durch Umsetzung von Reaktionsgemischen (= A-Zustand) aus organischen Polyisocyanaten und organischen Polyepoxiden durch Zugabe von Treibmitteln und die Epoxid/Isocyanat -Reaktion (im weiteren genannt "EPIC-Reaktion") beschleunigenden Katalysatoren in den endgültigen geschäumten nicht mehr schmelzbaren C-Zustand (im weiteren genannt "EPIC-Schaum") sowie deren Verwendung.

In frühen Untersuchungen beschreiben US 3 793 236, US 4 129 695 und US 3 242 108 die Herstellung von Schäumen aus Polyisocyanaten und Polyepoxiden. Teilweise wird, wie z.B. in US 3 849 349, die Zugabe von weiteren H-aktiven Substanzen beschrieben. Als mögliche Treibmittel werden die in der Polyurethanchemie bekannten Treibmittel gelistet und vorzugsweise FCKW in den Beispielen verwendet.

In der DE 25 51 631 wird die Herstellung von Polymeren aus Polyisocyanaten und Polyepoxiden beschrieben, welche alternierend aufgebaut sind. Da ein Katalysator zugegeben wird, welcher die Carbodiimidbildung fördert, enthalten die Polymere hohe Anteile an Carbodiimid-Strukturen (>10 Gew.-%) und eine kontrollierte Führung der parallel ablaufenden Trimerisierungs- und Carbodiimidbildungsreaktionen ist nicht möglich. Ein hoher Carbodiimid-Anteil wirkt sich jedoch in EPIC-Schäumen nachteilig im Hinblick auf Druckfestigkeit und Lambda-Werten aus und ist daher nicht erwünscht.

Der aktuellere Stand der Technik beschreibt die bevorzugte Herstellung solcher Schaumstoffe aus Reaktionsgemischen organischer Polyisocyanate und organischer Polyepoxide über eine Zwischenstufe enthaltend teilweise trimerisierte Isocyanuratgruppen (=Intermediat oder B-Zustand), welche mit Hilfe von Stoppern stabilisiert wird. In diesem Fall werden die hochtemperaturbeständigen Schaumstoffe durch Umsetzung von Reaktionsgemischen aus organischen Polyisocyanaten, organischen Polyepoxiden, Katalysatoren und Stoppern zu einem lagerstabilen höherviskosen Intermediat ('Vortrimerisierung') und der Umsetzung dieses höherviskosen Intermediats durch Zugabe von Treibmitteln und einem die Isocyanat/Epoxid-Reaktion spontan beschleunigenden Katalysator in den endgültigen geschäumten nicht mehr schmelzbaren Endzustand (EPIC-Schaum) erhalten.

Die Herstellung von lagerstabilen Isocyanat-Epoxid-Gemischen unter Zugabe eines alkylierend wirkenden Inhibierungsmittels als Stopper wird zunächst in EP 0 331 996 und EP 0 272 563 beschrieben. Die Herstellung eines EPIC-Schaumstoffes aus einem über ein mit alkylierend wirkenden Sulfonsäurealkylestern als Stopper versetztes Intermediat wird in DE 39 38 062 A1 offenbart.

Die Qualität der so hergestellten Schäume lässt sich gemäß WO 2012/80185 A1 und WO 2012/150201 A1 entscheidend verbessern, wenn bestimmte Treibmittel für die Herstellung der EPIC-Schaumstoffe verwendet werden.

Ein Nachteil dieser hochtemperaturbeständigen Schaumstoffe, insbesondere derjenigen, welche mittels des zweistufigen Verfahrens hergestellt werden, ist ein nicht befriedigender Umsatz der Isocyanat-(NCO)-gruppen. Freie (unreagierte) Isocyanatgruppen im Schaum (sogenanntes "Rest-NCO") können jedoch zu unerwünschten Alterungsprozessen, wie Haftungsproblemen und Verschlechterung von mechanischen Eigenschaften, z.B. Versprödung, führen.

Der Erfindung lag daher die Aufgabe zugrunde, hochtemperaturbeständige EPIC-Schäume mit niedrigen Rest-NCO-Werten zur Verfügung zu stellen.

Die erfindungsgemäße Aufgabe wurde gelöst durch einen Schaumstoff mit < 10 Gew.-% Carbodiimidstrukturen, erhältlich durch ein Verfahren bei dem man a) ein aromatisches Polyisocyanat mit b) mindestens einer, mindestens zwei Epoxidgruppen aufweisenden aromatischen Verbindung, c) mindestens einem, die Isocyanat/Epoxid-Reaktion beschleunigenden Katalysator, f) chemischen und/oder physikalischen Treibmitteln und e) Hilfs- und/oder Zusatzstoffen zu einer Reaktionsmischung vermischt, wobei das Äquivalentverhältnis von Isocyanatgruppen zu Epoxidgruppen von 1,2 : 1 bis 500 : 1 ist und man die Reaktionsmischung zum Schaumstoff umsetzt, dadurch gekennzeichnet, dass die Hilfs- und/oder Zusatzstoffe e) mindestens e1) ein bei 60 °C und 1 bar flüssiges Phosphat umfassen und optional mehrfunktionelle Hydroxyl- oder Aminogruppenhaltige Verbindungen e2) enthalten, wobei die Menge der Komponente a) so bemessen ist, dass das Äquivalentverhältnis von Isocyanatgruppen der Komponente a) zur Summe der Epoxidgruppen der Komponente b), Hydroxylgruppen und/oder Aminogruppen der Komponente e2) und den gegebenenfalls in der Komponente b) vorliegenden Hydroxylgruppen mindestens bei 1, 2 : 1 liegt, und dass die chemischen und/oder physikalischen Treibmittel f) mindestens eine Carbonsäure ausgewählt aus Ameisensäure und Essigsäure enthalten oder dass das Treibmittel f) aus Wasser und optional einer oder mehreren Verbindung(en) ausgewählt aus der Gruppe enthaltend Kohlenwasserstoffe, Fluor-Kohlenstoffe und Fluor-Kohlenwasserstoffe besteht, und dass als Komponente b) eine oder mehrere Verbindungen ausgewählt aus der Gruppe bestehend aus den Polyglycidylethern von Bisphenol A, Polyglycidylethern von Bisphenol F, Polyglycidylethern von Novolaken und Polyepoxidverbindungen auf der Basis von aromatischen Aminen eingesetzt wird.

Besonders bevorzugt erfolgt die Umsetzung in Gegenwart d) eines Stabilisators aus der Gruppe bestehend aus organischen Sulfonsäureestern, Methyljodid, Dimethylsulfat, Benzolsulfonsäureanhydrid, Benzolsulfonsäurechlorid, Benzolsulfonsäure, Trimethylsilyltrifluormethansulfonat, dem Reaktionsprodukt der Umsetzung von Benzolsulfonsäure mit Epoxiden sowie Mischungen daraus.

Ein weiterer Gegenstand der Erfindung ist ein Verfahren zur Herstellung hochtemperaturbeständiger Schaumstoffe mit < 10 Gew.-% Carbodiimidstrukturen bei dem man a) aromatisches Polyisocyanat mit b) mindestens einer, mindestens zwei Epoxidgruppen aufweisenden aromatischen Verbindung, c) mindestens einem, die Isocyanat/Epoxid-Reaktion beschleunigenden Katalysator, f) chemischen und/oder physikalischen Treibmitteln und e) Hilfs- und/oder Zusatzstoffen zu einer Reaktionsmischung vermischt, wobei das Äquivalentverhältnis von Isocyanatgruppen zu Epoxidgruppen von 1,2 : 1 bis 500 : 1 ist und man die Reaktionsmischung zum Schaumstoff umsetzt, dadurch gekennzeichnet,

dass die Hilfs- und/oder Zusatzstoffe e) mindestens ein e1) bei 60 °C und 1 bar flüssiges Phosphat umfassen und optional mehrfunktionelle Hydroxyl- oder Aminogruppenhaltige Verbindungen e2) enthalten,

wobei die Menge der Komponente a) so bemessen ist, dass das Äquivalentverhältnis von Isocyanatgruppen der Komponente a) zur Summe der Epoxidgruppen der Komponente b), Hydroxylgruppen und/oder Aminogruppen der Komponente e2) und den gegebenenfalls in der Komponente b) vorliegenden Hydroxylgruppen mindestens bei 1, 2 : 1 liegt, und dass die chemischen und/oder physikalischen Treibmittel f) mindestens eine Carbonsäure ausgewählt aus Ameisensäure und Essigsäure enthalten oder dass das Treibmittel f) aus Wasser und optional einer oder mehreren Verbindung(en) ausgewählt aus der Gruppe enthaltend Kohlenwasserstoffe, Fluor-Kohlenstoffe und Fluor-Kohlenwasserstoffe besteht, und

dass als Komponente b) eine oder mehrere Verbindungen ausgewählt aus der Gruppe bestehend aus den Polyglycidylethern von Bisphenol A, Polyglycidylethern von Bisphenol F, Polyglycidylethern von Novolaken und Polyepoxidverbindungen auf der Basis von aromatischen Aminen eingesetzt wird.

Besonders bevorzugt wird das Verfahren zur Herstellung der erfindungsgemäßen hochtemperaturbeständigen Schaumstoffe so durchgeführt, dass die Umsetzung in Gegenwart

d) eines Stabilisators aus der Gruppe bestehend aus organischen Sulfonsäureestern, Methyljodid, Dimethylsulfat, Benzolsulfonsäureanhydrid, Benzolsulfonsäurechlorid, Benzolsulfonsäure, Trimethylsilyltrifluormethansulfonat, dem Reaktionsprodukt der Umsetzung von Benzolsulfonsäure mit Epoxiden sowie Mischungen daraus durchgeführt wird.

In einer bevorzugten Ausführungsform wird das Verfahren zur Herstellung der erfindungsgemäßen hochtemperaturbeständigen Schaumstoffe durch

    (i) Reaktion von

        a) mindestens einem aromatischem Polyisocyanat in Gegenwart
        c1) eines tertiären Amins als Katalysator zu einem Isocyanuratgruppen aufweisenden Zwischenprodukt, und

    (ii) Abbruch der Reaktion unter Schritt (i) bei einer Umsetzung von maximal 60% der Isocyanatgruppen des Isocyanates a) durch Zugabe einer der Aminmenge c1) mindestens äquivalenten Menge
    d) eines Stabilisators aus der Gruppe bestehend aus organischen Sulfonsäureestern, Methyljodid, Dimethylsulfat, Benzolsulfonsäureanhydrid, Benzolsulfonsäurechlorid, Benzolsulfonsäure, Trimethylsilyltrifluormethansulfonat, dem Reaktionsprodukt der Umsetzung von Benzolsulfonsäure mit Epoxiden sowie Mischungen daraus und
    (iii) Mischen des unter (ii) erhaltenen Produktes mit
    b) mindestens einer, mindestens zwei Epoxidgruppen aufweisenden aromatischen Verbindung in einer solchen Menge, die einem Äquivalentverhältnis von anfänglich eingesetzten Isocyanatgruppen zu Epoxidgruppen von 1,2 : 1 bis 500 : 1 entspricht, e) gegebenenfalls in Gegenwart von Hilfs- und Zusatzstoffen durchgeführt, wobei die unter (iii) erhaltene Mischung durch
    (iv) Zugabe von Treibmittel f), welches mindestens eine Carbonsäure ausgewählt aus Ameisensäure und Essigsäure enthält, oder aus Wasser und optional einer oder mehreren Verbindung(en) ausgewählt aus der Gruppe enthaltend Kohlenwasserstoffe, Fluor-Kohlenstoffe und Fluor-Kohlenwasserstoffe besteht,

und mindestens einem bei 60 °C und 1 bar flüssigen Phosphat e1)
und einem die Isocyanat/Epoxid-Reaktion beschleunigenden Katalysator c2) unter Aufschäumen in den geschäumten Zustand überführt wird.

In einer besonderen Ausführungsform wird das Verfahren zur Herstellung der erfindungsgemäßen hochtemperaturbeständigen Schaumstoffe durch

    (i) Mischen von

        a) mindestens einem aromatischen Polyisocyanat und

        b) mindestens einer, mindestens zwei Epoxidgruppen aufweisenden aromatischen Verbindung in einer solchen Menge, die einem Äquivalentverhältnis von Isocyanatgruppen zu Epoxidgruppen von 1,2 : 1 bis 500 : 1 entspricht,

(ii) Reaktion der Mischung durch Zugabe

c1) eines tertiären Amins als Katalysator zu einem Zwischenprodukt, und

(iii) Abbruch der Reaktion bei einer Umsetzung von maximal 60% der Isocyanatgruppen des Isocyanates a) durch Zugabe einer der Aminmenge c) mindestens äquivalenten Menge

d) eines Stabilisators aus der Gruppe bestehend aus organischen Sulfonsäureestern, Methyljodid, Dimethylsulfat, Benzolsulfonsäureanhydrid, Benzolsulfonsäurechlorid, Benzolsulfonsäure, Trimethylsilyltrifluormethansulfonat, dem Reaktionsprodukt der Umsetzung von Benzolsulfonsäure mit Epoxiden sowie Mischungen daraus, so dass ein intermediärer stabiler B-Zustand des Viskositätsbereichs von 1500 bis 20000 mPas bei 25°C erhalten wird,

e) gegebenenfalls in Gegenwart von Hilfs- und Zusatzstoffen, wobei

die unter (iii) erhaltene Mischung durch

(iv) Zugabe von Treibmittel f), welches mindestens eine Carbonsäure ausgewählt aus Ameisensäure und Essigsäure enthält oder aus Wasser und optional einer oder mehreren Verbindung(en) ausgewählt aus der Gruppe enthaltend Kohlenwasserstoffe, Fluor-Kohlenstoffe und Fluor-Kohlenwasserstoffe besteht,

und mindestens einem bei 60 °C und 1 bar flüssigen Phosphat e1) und einem die Isocyanat/Epoxid-Reaktion beschleunigenden Katalysator c2) unter Aufschäumen in den geschäumten Zustand überführt wird.

Besonders bevorzugt wird Ameisensäure als alleiniges Treibmittel eingesetzt oder eine Mischung aus Ameisensäure und Wasser, bevorzugt aus mindestens 60 Gew.-% Ameisensäure und maximal 40 Gew.-% Wasser, besonders bevorzugt aus mindestens 80 Gew.-% Ameisensäure und maximal 20 Gew.-% Wasser.

Nach dem Aufschäumen in den geschäumten Zustand kann vorzugsweise eine nachträgliche Temperaturbehandlung zwischen 70 und 250°C durchgeführt werden.

Weitere bevorzugte Ausführungsformen finden sich in den Unteransprüchen.

Ein weiterer Gegenstand der Erfindung ist die Verwendung der erfindungsgemäßen hochtemperaturbeständigen Schaumstoffe, gegebenenfalls nach Temperung, als Füllschaum für Hohlräume, als Füllschaum zur Elektroisolierung, als Kern von Sandwich-Konstruktionen, zur Herstellung von Konstruktionsmaterialien für Innen- und Außenanwendungen jeglicher Art, zur Herstellung von Konstruktionsmaterialien für den Fahrzeug-, Schiff-, Flugzeug- und Raketenbau, zur Herstellung von Flugzeuginnen- und -außenbauteilen, zur Herstellung von Dämmaterialien jeglicher Art, zur Herstellung von Dämmplatten, Rohr- und Behälterisolierungen, zur Herstellung von schallabsorbierenden Materialien, zum Einsatz in Motorräumen, zur Herstellung von Schleifscheiben und zur Herstellung von Hochtemperaturisolierungen und schwer entflammbaren Isolierungen.

Ein weiterer Gegenstand der Erfindung ist die Verwendung der schaumfähigen Mischungen vor dem Ende der Verschäumung zum erfindungsgemäßen hochtemperaturbeständigen Schaumstoff zum Verkleben von Substraten, zum Verkleben von Stahl- Aluminium- und Kupferblechen, Kunststoffplatten und Polybutylenterephthalat-Platten.

Ein weiterer Gegenstand der Erfindung sind Hohlräume, Elektroisolierungen, Kerne von Sandwich-Konstruktionen, Sandwich-Konstruktionen, Konstruktionsmaterialien für Innen- und Außenanwendungen jeglicher Art, Konstruktionsmaterialien für den Fahrzeug-, Schiff-, Flugzeug- und Raketenbau, Flugzeuginnen- und -außenbauteile, Dämmaterialien jeglicher Art, Dämmplatten, Rohr- und Behälterisolierungen, schallabsorbierende Materialien, Dämm- und Isoliermaterialien in Motorräumen, Schleifscheiben, Hochtemperaturisolierungen und schwer entflammbare Isolierungen, welche dadurch gekennzeichnet sind, dass sie die erfindungsgemäßen hochtemperaturbeständigen Schaumstoffe enthalten oder aus ihnen bestehen.

Ein weiterer Gegenstand der Erfindung sind Verklebungen von Substraten, z.B. Aluminium, Stahl- und Kupferblechen, Kunststoffplatten, z.B. Polybutylenterephthalat-Platten, welche dadurch gekennzeichnet sind, dass sie die erfindungsgemäßen hochtemperaturbeständigen Schaumstoffe enthalten oder aus ihnen bestehen.

Bei der Isocyanatkomponente a) handelt es sich um beliebige aromatische Polyisocyanate der aus der Polyurethanchemie an sich bekannten Art. Geeignet sind beispielsweise Polyisocyanate, wie sie z.B. von W. Siefken in Justus Liebigs Annalen der Chemie, 562, Seiten 75 bis 136, beschrieben werden, beispielsweise solche der Formel

$Q(NCO)_n$,

in der

n =     2-4, vorzugsweise 2,

und

Q     einen aromatischen Kohlenwasserstoffrest mit 6-15, vorzugsweise 6-13 C-Atomen, oder einen araliphatischen Kohlenwasserstoffrest mit 8-15, vorzugsweise 8-13 C-Atomen, bedeuten, z.B. 1,3- und 1,4-Phenylendiisocyanat, 2,4- und 2,6-Toluylendiisocyanat sowie beliebige Gemische dieser Isomeren, Diphenylmethan-2,4- und/oder -4,4'-diisocyanat, Naphthylen-1,5-diisocyanat.

Weiterhin kommen beispielsweise erfindungsgemäß in Frage: Triphenylmethan-4,4',4"-triisocyanat, Polyphenyl-polymethylenpolyisocyanate, wie sie durch Anilin-Formaldehyd-Kondensation und anschließende Phosgenierung erhalten werden (GB 874 430 und GB 848 671), m- und p-Isocyanatophenylsulfonyl-isocyanate (US 3 454 606), perchlorierte Arylpolyisocyanate, (US 3 277 138), Carbodiimidgruppen aufweisende Polyisocyanate (US 3 152 162), Allophanatgruppen aufweisende Polyisocyanate, (GB 994 890), Isocyanuratgruppen aufweisende Polyisocyanate, (US 3 001 973), Urethangruppen aufweisende Polyisocyanate, (US 3 394 164 und 3 644 457), acylierte Harnstoffgruppen aufweisende Polyisocyanate (DE-PS 1 230 778), Biuretgruppen aufweisende Polyisocyanate, (US 3 124 605, 3 201 372 und 3 124 605), durch Telomerisationsreaktionen hergestellte Polyisocyanate (US 3 654 106), Estergruppen aufweisende Polyisocyanate, (US 3 567 763), Umsetzungsprodukte der obengenannten Isocyanate mit Acetalen (DE-PS 1 072 385) und polymere Fettsäureester enthaltende Polyisocyanate (US 3 455 883).

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z.B. das 2,4- und 2,6-Toluylendiisocyanat sowie beliebige Gemische dieser Isomeren ("TDI"), insbesondere Polyphenylpolymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenyl-methandiisocyanat ableiten.

Besonders bevorzugt ist die Verwendung eines Isomeren- und/oder Homologengemisches von Polyisocyanaten der Diphenylmethan-Reihe mit einem Gehalt an 2,4'-Diisocyanatodiphenylmethan von mehr als 20 Gew.-%.

Es handelt sich hierbei um Polyisocyanatgemische der Diphenylmethanreihe mit einem Gehalt an 2,4'-Diisocyanatodiphenylmethan von mehr als 20 Gew.-%, vorzugsweise von 30 bis 70 Gew.-%. Neben dieser 2,4'-Isomeren enthält die besonders bevorzugte Polyisocyanat-Komponente im allgemeinen weitere isomere bzw. homologe Polyisocyanate der Diphenylmethanreihe. Dies bedeutet, dass es sich bei der besonders bevorzugten Polyisocyanat-Komponente im allgemeinen entweder um Gemische aus 2,4'-Diisocyanatodiphenylmethan mit 4,4'-Diisocyanatodiphenylmethan und gegebenenfalls 0 bis 20 Gew.-%, bezogen auf das Gesamtgemisch an 2,2'-Diisocyanat-diphenylmethan, oder aber um Gemische dieser Isomeren mit höherkernigen Polyphenyl-polymethylen-polyisocyanaten handelt. In den letztgenannten Gemischen liegt im allgemeinen ein Gehalt von 10 bis zu 60 Gew.-% bezogen auf Gesamtgemisch an derartigen höherkernigen Polyisocyanaten vor. Das erstgenannte als bevorzugt einzusetzende Polyisocyanat-Komponente geeignete an 2,4'-Isomeren angereicherte Diisocyanatgemisch kann beispielsweise durch Abdestillieren eines Diisocyanatgemischs der angegebenen Zusammensetzung aus einem Polyisocyanat-Gemisch erhalten werden, wie es durch Phosgenierung von Anilin-Formaldehyd-Kondensaten entsteht. Das ebenfalls besonders bevorzugt geeignete, höherkernige Polyisocyanate enthaltende Gemisch kann beispielsweise durch Rückvermischen des zuletzt genannten Destillationsproduktes mit an 4,4'-Diisocyanatodiphenylmethan verarmten Phosgenierungsprodukt beispielsweise gemäß DE-AS 1 923 214 erhalten werden. Es ist auch möglich, ein derartiges Gemisch, d.h. ein Polyisocyanatgemisch, dessen Gehalt an 2,4'-Diisocyanatodiphenylmethan den gemachten Angaben entspricht, direkt durch entsprechende Steuerung der Anilin/Formaldehyd-Kondensation zu erhalten. Die US-PS 3 277 173 beschreibt beispielsweise einen Weg zu Polyamingemischen der Diphenylmethanreihe mit einem hohen Gehalt an 2,4'-Diaminodiphenylmethan. Durch Phosgenierung dieser an 2,4'-Diaminodiphenylmethan reichen Kondensate können dann direkt die besonders bevorzugt einsetzbaren Polyisocyanate erhalten werden. Auch in der DE-OS 1 937 685 sowie in der US-PS 3 362 979 werden Wege zu derartigen Polyisocyanatgemischen gewiesen. Auch in den besonders bevorzugt geeigneten Polyisocyanatgemischen, welche höherkernige Polyisocyanate der Diphenylmethanreihe enthalten, liegt der Gehalt an 2,4'-Diisocyanatodiphenylmethan oberhalb 20 Gew.-% bezogen auf Gesamtgemisch.

Bei der Epoxidgruppen enthaltenden Komponente b) handelt es sich um beliebige, mindestens zwei Epoxidgruppen aufweisende aromatische Verbindungen. Die bevorzugten als Komponente b) geeigneten Epoxide weisen pro Molekül 2 bis 4, vorzugsweise 2 Epoxidgruppen und ein Epoxidäquivalentgewicht von 90 bis 500 g/eq, vorzugsweise 170 bis 220 g/eq auf.

Geeignete Polyepoxide sind beispielsweise Polyglycidylether mehrwertiger Phenole, beispielsweise von Brenzkatechin, Resorcin, Hydrochinon, 4,4'-Dihydroxydiphenylpropan (Bisphenol A), von 4,4'-Dihydroxy-3,3'-dimethyldiphenylmethan, von 4,4'-Dihydroxydiphenylmethan (Bisphenol F), 4,4'-Dihydroxydiphenylcyclohexan, von 4,4'-Dihydroxy-3,3'-dimethyl-diphenylpropan, von 4,4'-Dihydroxydiphenyl, aus 4,4'-Dihydroxydiphenylsulfon (Bisphenol S), von Tris-(4-hydroxyphenyl)-methan, von Novolaken (d.h. aus Umsetzungsprodukten von ein- oder mehrwertigen Phenolen mit Aldehyden, insbesondere Formaldehyd, in Gegenwart saurer Katalysatoren), von Diphenolen, die durch Veresterung von 2 Mol des Natriumsalzes einer aromatischen Oxycarbonsäure mit einem Mol eines Dihalogenalkans oder Dihalogendialkylesters erhalten wurden (vgl. britisches Patent 1 017 612) oder von Polyphenolen, die durch Kondensation von Phenolen und langkettigen, mindestens zwei Halogenatome enthaltenden Halogenparaffinen erhalten wurden (vgl. GB-PS 1 024 288). Weiterhin seien genannt: Polyepoxidverbindungen auf der Basis von aromatischen Aminen und Epichlorhydrin, z.B. N-Di-(2,3-epoxypropyl)-anilin, N,N'-Dimethyl-N,N'-diepoxypropyl-4,4'-diaminodiphenylmethan, N,N-Diepoxypropyl-4-amino-phenyl-glycidether (vgl. GB-PS 772 830 und 816 923).

Erfindungsgemäß werden als Komponente b) eine oder mehrere Verbindungen ausgewählt aus der Gruppe bestehend aus den Polyglycidylethern von Bisphenol A, den Polyglycidylethern von Bisphenol F, den Polyglycidylethern von Novolaken und Polyepoxidverbindungen auf der Basis von aromatischen Aminen eingesetzt.

Bevorzugt werden folgende Polyepoxidverbindungen oder deren Mischungen als Komponente b) verwendet: Polyglycidylether mehrwertiger Phenole, insbesondere von Bisphenol A (Ruetapox® 0162, Bakelite AG; Epikote® Resin 162, Hexion Specialty Chemicals GmbH; Eurepox 710, Brenntag GmbH) und Bisphenol F Polyepoxidverbindungen auf der Basis von aromatischen Aminen, insbesondere Bis(N-epoxypropyl)anilin, N,N'-Dimethyl-N,N'-diepoxypropyl-4,4'-diaminodiphenylmethan und N,N-Diepoxypropyl-4-aminophenylglycidylether.

Insbesonders ist bevorzugt, das die Polyepoxidverbindung b) halogenfrei ist.

Die Komponente b) wird in einer solchen Menge eingesetzt, die einem Äquivalentverhältnis von Isocyanatgruppen zu Epoxidgruppen von 1,2 : 1 bis 500 : 1, vorzugsweise 3 : 1 bis 65 : 1, insbesondere 3 : 1 bis 30 : 1, besonders bevorzugt 3 : 1 bis 10 : 1, ganz besonders bevorzugt 4 : 1 bis 7 : 1 entspricht.

Die Katalysatorkomponente c) umfasst die Katalysatorkomponenten c1) und c2). Dabei handelt es sich um beliebige mono- oder polyfunktionelle organische Amine mit tertiären Aminogruppen. Geeignete Amine der genannten Art weisen im Allgemeinen ein Molekulargewicht von bis zu 353, vorzugsweise von 101 bis 185 auf. Bevorzugt sind solche tertiären Amine, die bei der Reaktionstemperatur der ersten Reaktionsstufe flüssig sind. Typische Beispiele geeigneter Amine sind Triethylamin, Tri-n-butylamin, Dimethylcyclohexylamin, N,N,N',N'-Tetramethylethylendiamin, N,N-Dimethylbenzylamin, Triethylendiamin oder Dimethyloctylamin, N-Methylmorpholin und Bis-(N,N-dimethylaminoethyl)-ether, bevorzugt ist N,N-Dimethylbenzylamin.

Erfindungsgemäß können bevorzugt als Katalysatoren c) neben den beschriebenen tert.-Aminen auch beliebige Gemische dieser genannten Aminverbindungen sowie z.B. Pentamethyldiethylentriamin, N-Methyl-N'-dimethylaminoethyl-piperazin, N,N-Diethylethanolamin sowie Silamorpholin eingesetzt werden.

Zu den geeigneten Aminen zählen auch solche, die neben der Katalysewirkung auch eine Treibwirkung besitzen. In diesem Falle agiert die Katalysatorkomponente c) gleichzeitig auch als Treibmittel.

Bevorzugt als Katalysatoren c) sind insbesondere N,N-Dimethylbenzylamin, Methyl-N,N-dibenzylamin, Bortrichlorid-tert.-Amin-Addukte sowie N-[3-(Dimethylamino)propyl]formamid.

Die Katalysatoren c) werden in einer Menge von 0,01 bis 4, vorzugsweise 0,01 bis 2 Gew.-%, bezogen auf das Gesamtgewicht der Komponente a) und b), eingesetzt.

Bei den Stabilisatoren d) (auch als "Stopper" bezeichnet) handelt es sich um sogenannte Katalysatorengifte für die Katalysatoren c). Geeignet sind beliebige, alkylierend wirkende Ester von organischen Sulfonsäuren. Vorzugsweise weisen diese Sulfonsäurealkylester ein Molekulargewicht von 110 bis 250 g/mol auf. Geeignet sind sowohl aliphatische Sulfonsäurealkylester, wie n-Butansulfonsäuremethylester, n-Perfluorbutansulfonsäuremethylester oder n-Hexansulfonsäureethylester, als auch aromatische Sulfonsäurealkylester, wie Benzolsulfonsäuremethylester, -ethylester oder -n-butylester, p-Toluolsulfonsäuremethylester, - ethylester oder -n-butylester, 1-Naphthalinsulfonsäuremethylester, 3-Nitrobenzolsulfonsäuremethylester oder 2-Naphthalinsulfonsäuremethylester. Die genannten aromatischen Sulfonsäureester sind bevorzugt. Besonders bevorzugt wird p-Toluolsulfonsäuremethylester als Komponente d) verwendet. Ebenfalls geeignet jedoch weniger bevorzugt sind Methyljodid und Dimethylsulfat als Komponente d), ebenso Benzolsulfonsäureanhydrid, Benzolsulfonsäurechlorid, Benzolsulfonsäure, Trimethylsilyltrifluormethansulfonat sowie das Reaktionsprodukt der Umsetzung von Benzolsulfonsäure mit Epoxiden, bevorzugt Phenoxypropylenoxid.

Die Komponente d) wird mindestens in einer solchen Menge verwendet, die den tert.-Aminstickstoffatomen der Komponente c1) äquivalent ist.

Als Treibmittel f) kommen zusätzlich zu der mindestens einen Carbonsäure ausgewählt aus Ameisensäure und Essigsäure als chemische Treibmittel Wasser und/oder Phospholinoxid in Frage. Als physikalische Treibmittel werden Kohlenwasserstoffe wie Pentan, Butan, Hexan, Fluor-Kohlenstoffe oder Fluor-Kohlenwasserstoffe eingesetzt.

Bevorzugt enthalten die Treibmittel f) mindestens eine Carbonsäure ausgewählt aus Ameisensäure und Essigsäure, besonders bevorzugt enthalten die Treibmittel f) Ameisensäure.

In einer besonders bevorzugten Ausführungsform stellt Ameisensäure das alleinige Treibmittel dar.

In einer ebenfalls besonders bevorzugten Ausführungsform besteht das Treibmittel aus einer Mischung aus Ameisensäure und Wasser, bevorzugt aus mindestens 60 Gew.-% Ameisensäure und maximal 40 Gew.-% Wasser, besonders bevorzugt aus mindestens 80 Gew.-% Ameisensäure und maximal 20 Gew.-% Wasser.

Das erfindungsgemäß zuzusetzende Phosphate e1) besitzt bei 60 °C und 1 bar einen flüssigen Aggregatzustand.

Bevorzugt handelt es sich bei dem Phosphat um eine oder mehrere organische Verbindung(en) ausgewählt aus der Gruppe enthaltend Tributylphosphat, Triethylphosphat, Triphenylphosphat, alle Isomere des Diphenylkresylphosphats, o,o,o-Trikresylphosphat, m,m,m- Trikresylphosphat, Tris(2-chloropropyl)phosphat, Diphenyl-2-ethylhexylphosphate, Dimethylpropanphosphat und Diethyl-bis-(2)- hydroxyethyl)aminomethylphopshat.

Besonders bevorzugt eingesetzt werden Phosphate ausgewählt aus der Gruppe enthaltend Tributyl-, Triethyl-, oder Triphenylphosphat, alle Isomere des Diphenylkresylphosphats, m,m,m- und o, o,o-Trikresylphosphat, Tris(2-chloropropyl)phosphat, Diphenyl-2-ethylhexylphosphat, Dimethylpropanphosphat, Diethyl-bis-(2-hydroxyethyl)aminomethylphosphat.

Insbesondere bevorzugt eingesetzt werden Tributyl-, Triethyl-, oder Triphenylphosphat, alle Isomere des Diphenylkresylphosphats, m,m,m- und o, o,o-Trikresylphosphat und/ oder Tris(2-chloropropyl)phosphat.

Die Phosphate e1) werden in einer Menge von 0,5 bis 50, vorzugsweise 1 bis 40 Gew.-%, besonders bevorzugt 3 bis 25 Gew.-%, bezogen auf das Gesamtgewicht der Komponente a) und b), eingesetzt.

Bevorzugte weitere Hilfs- und Zusatzmittel e) sind die bekannten Schaumstoffstabilisatoren vom Typ der Polyethersiloxane, Formtrennmittel, z.B. Polyamidwachse und/oder Stearinsäurederivate und/oder natürliche Wachse, z.B. Carnaubawachs.

Als weitere Hilfs- und Zusatzmittel e) können beispielsweise mehrfunktionelle Hydroxyl- oder Aminogruppenhaltige Verbindungen e2) eingesetzt werden, welche e2-i) Verbindungen umfassen, die mindestens 2, insbesondere 2 bis 8 und vorzugsweise 2 bis 3 alkoholische Hydroxylgruppen und ein Molekulargewicht von 62 bis 8000 g/mol aufweisen. Solche Verbindungen sind als Aufbaukomponente für Polyurethan an sich bekannt und umfassen niedermolekulare Kettenverlängerer und Polyole mit zahlenmittleren Molekulargewichten von größer als 200 g/mol. Beispiele für Kettenverlängerer sind einfache mehrwertige Alkohole wie Ethylenglykol, Hexadiol-1,6, Glycerin oder Trimethylolpropan, Beispiele für Polyole sind Dimethylsiloxan-Einheiten aufweisende Polyole, z.B. Bis-(dimethylhydroxymethyl-silyl)ether; Estergruppen aufweisende Polyhydroxylverbindungen wie z.B. Ricinusöl oder Polyhydroxypolyester, wie sie durch Polykondensation überschüssiger Mengen einfacher mehrwertiger Alkohole der soeben beispielhaft genannten Art mit vorzugsweise dibasischen Carbonsäuren bzw. deren Anhydride wie z.B. Adipinsäure, Phthalsäure oder Phthalsäureanhydrid zugänglich sind, Poly-hydroxylpolyether wie sie durch Anlagerung von Alkylenoxiden wie Propylenoxid und/oder Ethylenoxid an geeignete Startermoleküle wie z.B. Wasser, die soeben genannten einfachen Alkohole oder auch Amine mit mindestens zwei aminischen NH-Bindungen zugänglich sind, oder Polycarbonatpolyole, die beispielsweise aus mehrwertigen Alkoholen und Carbonaten oder Phosgen erhalten werden können.

Die Verbindungen e2) können darüber hinaus auch e2-ii) Verbindungen mit mindestens zwei gegenüber Isocyanaten reaktiven Wasserstoffatomen sein, von denen mindestens eines zu einer primären oder sekundären Aminogruppe gehört. Diese umfassen Polyetheramine und Verbindungen mit Molekulargewichten von kleiner 500 g/mol und zwei Aminogruppen. Polyetheramine sind aus der Polyurethanchemie bekannt und können erhalten werden durch endständige Aminierung von Polyetherpolyolen. Diese weisen vorzugsweise Molekulargewichte von 500 bis 8000 g/mol auf. Die vorzugsweise verwendeten Verbindungen mit zwei Aminogruppen und mit Molekulargewichten von kleiner 500 g/mol weisen besonders bevorzugt ein Molekulargewicht von 58 bis 300 g/mol und insbesondere von 100 bis 200 g/mol auf. Dabei weisen diese Verbindungen als gegenüber Isocyanaten reaktive Gruppen vorzugsweise zwei primäre Aminogruppen auf. In einer besonders bevorzugten Ausführungsform sind die primären Aminogruppen an aromatische Kohlenstoffatome, vorzugsweise an einen aromatischen 6-Ring, insbesondere in Metha- oder Paraposition gebunden. Insbesondere wird als Verbindungen e2-ii) Diethylentoluoldiamin (DETDA), insbesondere DETDA 80 eingesetzt. Diethylentoluoldiamin ist kommerziell erhältlich, beispielsweise von der Lonza oder Abemarle.

Werden Verbindungen mit zwei Aminogruppen und mit Molekulargewichten von kleiner 500 g/mol eingesetzt, geschieht dies vorzugsweise in Mengen von 0,1 bis 5, besonders bevorzugt von 0,5 bis 2 Gew.-%, bezogen auf das Gesamtgewicht der Verbindungen (a) und (b).

Die Hilfs- und Zusatzstoffe e2) werden bevorzugt, falls überhaupt, in einer solchen maximalen Menge mitverwendet, die einem NCO/OH-Äquivalentverhältnis, bezogen auf die Isocyanatgruppen der Komponente a) und die Hydroxylgruppen und/oder Aminogruppen der Komponenten e2), von mindestens 2:1, vorzugsweise mindestens 7 : 1 und insbesondere mindestens 10:1 entspricht. In jedem Fall muss die Menge der Komponente a) so bemessen sein, dass das Äquivalentverhältnis von Isocyanatgruppen der Komponente a) zur Summe der Epoxidgruppen der Komponente b), Hydroxylgruppen und/oder Aminogruppen der Komponente e2) und den gegebenenfalls in der Komponente b) vorliegenden Hydroxylgruppen mindestens bei 1,2 : 1, vorzugsweise 3 : 1 bis 65 : 1, insbesondere 3 : 1 bis 30 : 1, besonders bevorzugt 3 : 1 bis 15 : 1, liegt.

Das Verhältnis des Gewichts aller Hydroxyl- und / oder Harnstoffgruppen - haltigen Verbindungen aus der Komponente e2), vorzugsweise aus den Polyolen und Polyetheraminen, zu dem Gewicht der Epoxidkomponente b) ist bevorzugt kleiner als 30:70, bevorzugt beträgt es höchstens 28:72, besonders bevorzugt höchstens 25:75 und ganz besonders bevorzugt 0 bis 20 : 80 bis 100.

Der erfindungsgemäße EPIC-Schaum enthält Urethangruppen und/oder Harnstoffgruppen stammend aus der Reaktion des Polyisocyanats a) mit der Komponente e) vorzugsweise in einem kleinen Gewichtsanteil. Der Gehalt an Urethangruppen und/oder Harnstoffgruppen resultierend aus der Reaktion des Polyisocyanats a) mit den Hydroxyl- und/oder Aminogruppen aus der Komponente e) liegt vorzugsweise unter 6 Gew.-%, bevorzugt unter 5 Gew.-%, besonders bevorzugt unter 4 Gew.-%, und ganz besonders bevorzugt unter 3 Gew.-%, bezogen auf das Gesamtgewicht der Komponenten.

In einer besonders bevorzugten Ausführungsform enthält der EPIC-Schaum einen Gehalt an Urethangruppen und/oder Harnstoffgruppen resultierend aus der Reaktion des Polyisocyanats a) mit den Hydroxyl- und/oder Aminogruppen aus der Komponente e), der $\geq$ 0,01 bis $\leq$ 1,0 Gew.% beträgt, bevorzugt $\geq$ 0,01 bis < 0,8 Gew.%, bezogen auf das Gesamtgewicht der Komponenten.

In einer Ausführungsform enthält der EPIC-Schaum keine Urethangruppen und / oder Harnstoffgruppen, die aus der Reaktion des Polyisocyanats a) mit der Komponente e) resultieren.

Bevorzugt enthält die Reaktionsmischung weniger als 28 Gew.-%, bevorzugt weniger als 25 Gew-% an Hydroxylgruppen- und/oder Aminogruppen-haltigen Verbindungen der Komponente e2), bezogen auf das Gesamtgewicht der Komponenten b) und e2), und der EPIC-Schaum enthält weniger als 6 Gew.-%, bevorzugt weniger als 5 Gew.-%, ganz besonders bevorzugt $\geq$ 0,01 bis $\leq$ 1 Gew.% und insbesondere bevorzugt $\geq$ 0,01 bis < 0,8 Gew.%, bezogen auf das Gesamtgewicht der Komponenten an Urethan- und/oder Harnstoffgruppen stammend aus der Reaktion des Polyisocyanats a) mit der Komponente e), bezogen auf das Gesamtgewicht des Schaums.

Besonders bevorzugt enthält die Reaktionsmischung weniger als 28 Gew.-%, bevorzugt weniger als 25 Gew-% an Polyolen und / oder Polyetheraminen, bezogen auf das Gesamtgewicht der Komponenten b) und der Polyole und / oder Polyetheramine, und der EPIC-Schaum enthält weniger als 6 Gew.-%, bevorzugt weniger als 5 Gew.-%, ganz besonders bevorzugt $\geq$ 0,01 bis $\leq$ 1 Gew.% und insbesondere bevorzugt $\geq$ 0,01 bis < 0,8 Gew.%, bezogen auf das Gesamtgewicht der Komponenten an Urethan- und/oder Harnstoffgruppen stammend aus der Reaktion des Polyisocyanats a) mit der Komponente e), bezogen auf das Gesamtgewicht des Schaums.

Weitere, gegebenenfalls mitzuverwendende Hilfs- und Zusatzmittel e) sind e3) polymerisierbare, olefinisch ungesättigte Monomere, die in Mengen von bis zu 100 Gew.-%, vorzugsweise bis zu 50 Gew.-%, insbesondere bis zu 30 Gew.-%, bezogen auf das Gesamtgewicht der Komponenten a) und b) zum Einsatz gelangen können.

Typische Beispiele von Zusatzmitteln e3) sind olefinisch ungesättigte Monomere, die keine gegenüber NCO-Gruppen reaktive Wasserstoffatome aufweisen, wie z.B. Diisobutylen, Styrol, $C_1$-$C_4$-Alkylstyrole, wie $\alpha$-Methylstyrol, $\alpha$-Butylstyrol, Vinylchlorid, Vinylacetat, Maleinimidderivate wie z.B. Bis-(4-maleinimido-phenyl)-methan, Acrylsäure-$C_1$-$C_8$-alkylester wie Acrylsäuremethylester, Acrylsäurebutylester oder Acrylsäureoctylester, die entsprechenden Methacrylsäureester, Acrylnitril oder Diallylphthalat. Beliebige Gemische derartiger olefinisch ungesättigter Monomerer können ebenfalls eingesetzt werden. Vorzugsweise werden Styrol und/oder (Meth)-acrylsäure-$C_1$-$C_4$-alkylester verwendet, vorausgesetzt, die Zusatzmittel e3) werden überhaupt eingesetzt.

Bei Mitverwendung von Zusatzmitteln e3) ist die Mitverwendung von klassischen Polymerisationsinitiatoren wie z.B. Benzoylperoxid möglich, im Allgemeinen jedoch nicht erforderlich.

Die Mitverwendung von Hilfs- und Zusatzmitteln e2) bzw. e3) ist im Allgemeinen nicht erforderlich. Die unter e2) beispielhaft genannten Zusatzmittel sind im Übrigen gegenüber den unter e3) beispielhaft genannten Verbindungen bevorzugt. Grundsätzlich ist es auch möglich, gleichzeitig beide Arten von Hilfs- und Zusatzmitteln mitzuverwenden. Zur Optimierung der mechanischen Daten der EPIC-Schäume kann jedoch die Zugabe eines kleinen Anteil an Hilfs- und Zusatzmitteln e2) bzw. e3) vorteilhaft sein, wobei ein zu großer Anteil wiederum einen negativen Einfluss ausüben kann.

Weitere gegebenenfalls mitzuverwendende Hilfs- und Zusatzmittel e) sind beispielsweise e4) Füllstoffe wie z.B. Quarzmehl, Kreide, Microdol, Aluminiumoxid, Siliciumcarbid, Graphit oder Korund; Pigmente wie z.B. Titandioxid, Eisenoxid oder organische Pigmente wie Phthalocyanin-Pigmente; Weichmacher wie z.B. Dioctylphthalat; einbaufähige Verträglichkeitsvermittler wie Methacrylsäure, $\beta$-Hydroxypropylester, Maleinsäure- und Fumarsäureester; Flammschutz verbessernde Substanzen wie roter Phosphor oder Magnesiumoxid; lösliche Farbstoffe oder Verstärkungsmaterialien wie z.B. Glasfasern oder Glasgewebe. Ebenfalls geeignet sind C-Fasern bzw. C-Fasergewebe und andere organische Polymerfasern wie z.B. Aramidfasern oder LC-Polymerfasern (LC = "Liquid Crystal"). Weiterhin kommen als Füllstoffe metallische Füllstoffe in Betracht, wie Aluminium, Kupfer, Eisen und/oder Stahl. Die metallischen Füllstoffe werden insbesondere in körniger Form und/oder Pulverform eingesetzt.

Weitere gegebenenfalls mitzuverwendende Hilfs- und Zusatzmittel e) sind beispielsweise e5) olefinisch ungesättigte Monomere mit gegenüber NCO-Gruppen reaktiven Wasserstoffatomen wie z.B. Hydroxyethyl-methacrylat, Hydroxypropyl-methacrylat und Aminoethylmethacrylat.

Die Hilfs- und Zusatzmittel e) können sowohl den Ausgangsmaterialien a) und b) vor der Durchführung des erfindungsgemäßen Verfahrens einverleibt als auch erst später zugemischt werden.

Zur Durchführung des erfindungsgemäßen Verfahrens können die Ausgangsmaterialien a) und b) miteinander vermischt werden. Dem Reaktionsgemisch werden dann das Phosphat e1), gegebenenfalls weitere Hilfs- und Zusatzmittel e), der Katalysator c) und das Treibmittel f) zugesetzt, das Ganze innig vermischt und das schaumfähige Gemisch in eine offene oder geschlossene Form eingegossen.

Bei Verwendung eines aus der Polyurethan-Verarbeitung bekannten Mehrkomponenten-Mischkopfes zeichnet sich das Verfahren durch eine hohe Flexibilität aus. Durch Variation des Mischungsverhältnisses der Komponenten a) und b) können mit ein und denselben Ausgangsmaterialien verschiedene Schaumstoff-Qualitäten hergestellt werden. Zusätzlich können auch verschiedene Komponenten a) und verschiedene Komponenten b) in unterschiedlichen Verhältnissen direkt in den Mischkopf gefahren werden. Das Phosphat e1), die Hilfs- und Zusatzmittel e), der Katalysator c) und die Treibmittel f) können separat oder als Batch in den Mischkopf gefahren werden. Möglich ist auch eine Dosierung des Phosphats e1) und gegebenenfalls weiterer Hilfs- und Zusatzmittel e) zusammen mit dem Katalysator c) und eine separate Dosierung der Treibmittel f). Durch Variation der Menge der Treibmittel f) können Schäume mit verschiedenen Rohdichte-Bereichen hergestellt werden.

In einer speziellen Ausführungsform des erfindungsgemäßen Verfahrens wird durch Zugabe eines Stabilisators d) bei der Vermischung der Ausgangsmaterialien a) und b), des Phosphats e1) und gegebenenfalls der weiteren Hilfs- und Zusatzmittel e) bzw. eines Teils hiervon ein stabiles Reaktionsgemisch erhalten. Dieses kann, gegebenenfalls nach beliebig langer Zwischenlagerung der zweiten Stufe des erfindungsgemäßen Verfahrens zugeführt werden. Hierzu werden dem stabilen Reaktionsgemisch gegebenenfalls weitere Hilfs- und Zusatzmittel e), Katalysator c), sowie die Treibmittel f) zugesetzt, das Ganze innig vermischt und das schaumfähige Gemisch in eine offene oder geschlossene Form eingegossen.

Dieses Verfahren ist besonders vorteilhaft, wenn das Mischungsverhältnis der Komponenten a) und b) nicht variiert werden soll. Es sind keine separaten Vorratsbehälter, Dosiereinrichtungen und Mischkopf-Zuführungen für die Komponenten a) und b) notwendig.

In einer weiteren speziellen Ausführungsform des erfindungsgemäßen Verfahrens können die Ausgangsmaterialien a) und ein Katalysator c1), gegebenenfalls das Phosphat e1) bzw. ein Teil davon sowie gegebenenfalls weitere Hilfs- und Zusatzmittel e) bzw. ein Teil hiervon miteinander vermischt werden und innerhalb des Temperaturbereichs von 20 bis 150°C, vorzugsweise 60 bis 130°C, zur Reaktion gebracht werden. Nach einem Umsatz von maximal 60%, vorzugsweise von 15 bis 30% der über die Komponente a) eingebrachten Isocyanatgruppen wird die Reaktion durch Zugabe des Stabilisators/Stoppers d) abgebrochen. Das hierbei anfallende stabile Zwischenprodukt kann, gegebenenfalls nach beliebig langer Zwischenlagerung mit der Komponente b) vermischt werden, wodurch ein bei Raumtemperatur flüssiger B-Zustand erhalten wird. Dieser kann, gegebenenfalls nach beliebig langer Zwischenlagerung der zweiten Stufe des erfindungsgemäßen Verfahrens zugeführt werden. Hierzu werden dem B-Zustand die restliche Menge des Phosphats e1) und gegebenenfalls weitere Hilfs- und Zusatzmittel e), weiterer Katalysator c2) und das Treibmittel f) zugesetzt, das Ganze innig vermischt und das schaumfähige Gemisch in eine offene oder geschlossene Form gegeben.

Dieses Verfahren bietet den Vorteil eines höherviskosen B-Zustandes zu Beginn der Schäumreaktion. Je nachdem, ob, und wenn ja, welche Hilfs- und Zusatzmittel e) zugesetzt werden, führt ein höherviskoser B-Zustand zu verbesserten mechanischen Schaumeigenschaften. Das nachträgliche Vermischen der stabilen, teilumgesetzten Komponente a) mit der Komponente b) bietet den Vorteil einer hohen Flexibilität, da je nach Bedarf verschiedene Komponenten b) mit der teilumgesetzten Komponente a) zu verschiedenen stabilen B-Zuständen vermischt werden können.

In einer weiteren speziellen Ausführungsform des erfindungsgemäßen Verfahrens können die Ausgangsmaterialien a) bis c1), gegebenenfalls das Phosphat e1) bzw. ein Teil davon sowie gegebenenfalls weitere Hilfs- und Zusatzmittel e) bzw. ein Teil hiervon miteinander vermischt und innerhalb des Temperaturbereichs von 20 bis 150°C, vorzugsweise 60 bis 130°C, zur Reaktion gebracht werden. Nach einem Umsatz von maximal 60%, vorzugsweise von 15 bis 30% der über die Komponente a) eingebrachten Isocyanatgruppen wird die Reaktion durch Zugabe des Stabilisators/Stoppers d) abgebrochen. Das hierbei anfallende Zwischenprodukt stellt bei Raumtemperatur einen flüssigen B-Zustand dar und kann, gegebenenfalls nach beliebig langer Zwischenlagerung der zweiten Stufe des erfindungsgemäßen Verfahrens zugeführt werden. Hierzu werden dem Zwischenprodukt (B-Zustand), das restliche Phosphat e1) bzw. ein Teil davon sowie gegebenenfalls weitere Hilfs- und Zusatzmittel e), weiterer Katalysator c2) und das Treibmittel f) zugesetzt, das Ganze innig vermischt und das schaumfähige Gemisch in eine offene oder geschlossene Form eingegossen.

Dieses Verfahren bietet ebenfalls den Vorteil eines höherviskosen B-Zustandes zu Beginn der Schäumreaktion. Soll die Komponente b) nicht variiert werden, ist dieses Verfahren in bestimmten Fällen dem vorher beschriebenen vorzuziehen. Die in der Regel niedrigviskosen Komponenten a) und b) können leicht vermischt und daraus der höherviskose B-Zustand hergestellt werden. Die teilumgesetzte Komponente a) kann dagegen in Abhängigkeit von ihrer Natur und dem Grad der Umsetzung eine vergleichsweise hohe Viskosität aufweisen, was sowohl die Prozessführung bei der Teilumsetzung als auch das nachträgliche Vermischen mit der Komponente b) erschwert.

In den oben beschriebenen Ausführungsformen kann das Phosphat e1) entweder den Ausgangsmaterialien a), b) oder e) oder direkt dem B-Zustand zugegeben werden. Bevorzugt ist die Zugabe zu dem B-Zustand.

Je nach eingesetzten Komponenten beginnt der Treibvorgang im Allgemeinen nach einer Liegezeit von 10 s bis 6 min und ist in der Regel nach 2-12 min beendet. Die Schäume sind feinzellig und gleichmäßig.

Zwecks Erreichens optimaler Eigenschaften ist es vorteilhaft, nach dem Aufschäumen in den endgültigen geschäumten Zustand eine nachträgliche Temperaturbehandlung durchzuführen.

In einer bevorzugten Ausführungsform wird nach dem Aufschäumen in den endgültigen geschäumten Zustand eine nachträgliche Temperaturbehandlung zwischen 70 und 250°C, bevorzugt 120 und 250°C, besonders bevorzugt 180 und 220°C vorgenommen.

Bei Verwendung einer geschlossenen Form zur Herstellung der erfindungsgemäßen Schaumstoffe (Formverschäumung) kann es zwecks Erreichens optimaler Eigenschaften vorteilhaft sein, die Form zu überfüllen. Überfüllen bedeutet, eine Menge an schaumfähigem Gemisch einzufüllen, die in einer offenen Form nach dem kompletten Aufschäumen ein größeres Volumen einnehmen würde als das innere Volumen der Form ausmacht.

Die erfindungsgemäßen Schaumstoffe sind schwer entflammbar und besitzen niedrige dielektrische Verluste, die Feuchtebeständigkeit und Abriebfestigkeit sowie die Verarbeitbarkeit in Formen sind hervorragend.

Die erfindungsgemäßen Schaumstoffe besitzen < 10 Gew.-% Carbodiimid-Strukturen, bevorzugt weniger als 8 Gew.-%, ganz besonders bevorzugt weniger als 5 Gew.-%, bezogen auf das Gesamtgewicht des Schaumstoffs. Die Bestimmung des Gewichtanteils der Carbodiimid-Strukturen kann sowohl rechnerisch als auch über ATR-FTIR-Spektroskopie erfolgen.

Die Erfindung soll anhand der nachfolgenden Beispiele näher erläutert werden.

## Beispiele

Die dynamischen Viskositäten wurden bei 25 °C mit einem Rotationsviskometer (Rheoplus 32) bei einem Schergefälle von 120 s$^{-1}$ bestimmt. (DIN 53019)

Die Messung der Rohdichten erfolgte gemäß DIN 53 420 an Schaumwürfeln (5 cm x 5 cm x 5 cm), die aus der Mitte der Schäume geschnitten wurden.

Die Messung der Druckfestigkeiten erfolgte gemäß DIN EN 826 an Schaumwürfeln (5 cm x 5 cm x 5 cm), die aus der Mitte der Schäume geschnitten wurden.

Die Messung der maximalen mittleren Wärmefreisetzungsrate (MARHE - Wert) erfolgte gemäß ISO 5660-1. Die Messung der Gesamten Rauchentwicklung per beanspruchte Oberfläche (TSP) erfolgte gemäß ISO 5660-2. Alle Prüfungen wurden mit einer Strahlungswärmestromdichte von 50 kW/m$^2$ an Probenkörpern mit Abmessungen von 100 mm x 100 mm x 20 mm durchgeführt.

Entzündbarkeit und Flammenausbreitung wurden gemäß den Anforderungen an die Baustoffklasse B2 gemäß DIN4102-1 ermittelt.

Der NCO-Umsatz im Schaum wurde gemessen mittels ATR-FTIR an einer Scheibe, welche aus der Mitte der Schäume geschnitten wurden (Scheibe von 2 cm x10 cm x 0,5 cm). Dabei wurde folgendes Verfahren angewendet:

Die infrarotspektroskopische Bestimmung des NCO-Umsatzes erfolgte mit dem Fouriertransform-Infrarotspektrometer VERTEX 70 der Fa. Bruker, das mit der ATR- (abgeschwächte Totalreflektion-) Messeinheit MIRacle der Fa. Pike ausgestattet ist.

Die zu untersuchenden Schaumstoffproben wurden präpariert und mit Hilfe eines Ratschenmechanismus an den ZnSe-ATR-Kristall (Durchmesser 3mm, der MIRacle-Messeinheit gepresst. Für jedes Spektrum wurden 32 Scans bei einer spektralen Auflösung von 4 cm$^{-1}$ aufgenommen und gemittelt. Ausgewertet werden ATR-Absorbanzspektren unter Eliminierung von schiefen oder gekrümmten Basislinien mit der Gummibandmethode.

Die Ermittlung des spektroskopischen NCO-Umsatzes erfolgt mit Hilfe der spektral relativ frei liegenden NCO-Bande bei 2270 cm$^{-1}$. Ausgewertet wird der Anteil der Peakfläche zwischen 2200 und 2320 cm$^{-1}$ ($A_{NCO}$), der nicht von anderen Banden überlappt wird und näherungsweise proportional zur Konzentration der NCO-Gruppen ($C_{NCO}$) im analysierten Schaumbereich ist.

Mit der entsprechenden NCO-Peakfläche ($A_{NCO,0}$) zu Beginn der Schäumreaktion, die zu dem untersuchten Schaum geführt hat und näherungsweise proportional zur anfänglichen NCO-Konzentration ($C_{NCO,0}$) ist, kann der spektroskopische NCO-Umsatz zum Zeitpunkt der Analyse ermittelt werden:

$$\text{NCO-Umsatz } [\%] = 100 \bullet (1 - C_{NCO}/C_{NCO,0}) \approx 100 \bullet (1 - A_{NCO}/A_{NCO,0}).$$

Da $A_{NCO,0}$ in der Regel nicht direkt gemessen werden kann, wird dieser Parameter aus den vorab aufgenommenen Rohstoffspektren unter Berücksichtigung der jeweiligen Massenanteile in der Rezeptur, der Rohstoffdichten und Brechungsindizes berechnet (synthetisches Spektrum).

Für Mischungsreihen von Isocyanat mit nicht reaktiven Rohstoffen wurde gezeigt, dass die berechneten NCO-Peakflächen der zugehörigen synthetischen Gemischspektren gut mit den gemessenen NCO- Peakflächen übereinstimmen, so dass $A_{NCO,0}$ mit einiger Berechtigung aus dem synthetischen Gemischspektrum der Schaumrezeptur berechnet werden kann.

Eingesetzte Materialien:

ISOCYANAT

MDI-1: Desmodur 85/25, Isocyanat basierend auf Diisocyanatdiphenylmethan mit einem NCO-Gehalt von 32,5 Gew.-% und einer Viskosität von 20 mPa*s (DIN EN ISO 11909), enthaltend mindestens 85% monomeres MDI

PHOSPHAT

- Disflamol DPK : (Diphenylkresylphosphat), Handelsnamen, erhältlich von Lanxess, Deutschland, Viskosität bei 20 °C 44-49 mPa.s. klare, farblose Flüssigkeit,

- Disflamol TKP : (Trikresylphosphat), Handelsnamen erhältlich von Lanxess, Deutschland, Viskosität bei 20 °C 70-80 mPa.s. klare, farblose Flüssigkeit

- Handelsnamen Levagard TCPP (Tris(2-chloropropyl)phosphat), , erhältlich von Lanxess, Deutschland, Viskosität bei 20 °C <100 mPa.s. klare, farblose Flüssigkeit

ADDITIV 1:

25 Gew.-% Polyetherpolysiloxan (Tegostab B8411, Evonik), 62,5 Gew.-% Polyetherpolyol (OH-Zahl 56 mg KOH/g, Funktionalität 2, hergestellt durch Propoxylierung von Propylenglykol) und 12,5 Gew.-% N-(3-dimethylaminopropylformamid)

TREIBMITTEL

Treibmittel 1: Ameisensäure (98 - 100 Gew.-%), CAS Nr. 64-18-6, erhältlich von KMF Laborchemie, Lohmar/ Deutschland

Treibmittel 2: Solkane 365/227 (flüssiger Hydrofluorkohlenstoff als Treibmittel für Schäume, Mischung aus Pentafluorbutan (87 Gew.-%) mit Heptafluorpropan (13 Gew.-%), erhältlich von Solvay Fluor GmbH, Hannover, Deutschland

EPOXID:

BADGE1: Ruetapox 0162, Diglycidylether von Bisphenol A, Handelsprodukt von Bakelite AG; Duisburg/Deutschland, Epoxidindex: 5,8 - 6,1 eq/kg und einem Epoxy-äquivalent von 167-171 g/eq, Viskosität bei 25 °C 4000-5000 mPas

A) <u>Herstellung des EPIC-Harzes A</u>

8000 g MDI-1 wurde bei 95 °C mit 2000 g EPOXID versetzt. Anschließend wurden 1,6 ml Dimethylbenzylamin zugegeben und unter Rühren vermischt. Die leicht exotherme Reaktion zeigte den sofortigen Beginn der Isocyanuratbildung an. Nach 2 Stunden Reaktionszeit wurde dem Ansatz eine Probe entnommen. Die Probe besaß einen NCO-Gehalt von 21,5 Gew.-%. Durch Zugabe von 40 g p-Toluolsulfonsäuremethylester wurde die Reaktion abgebrochen. Anschließend rührte man den Ansatz weitere 30 min bei 95 bis 80 °C.

Das Produkt hat eine Viskosität bei 25 ° C von 3900 mPa.s (DIN 53019) und einen NCO-Gehalt von 21,0 Gew.-% NCO (DIN EN ISO11909:2007)

B) Allgemeine Beschreibung der Herstellung der Schäume 1 bis 4 aus Tabelle 1:

Zur Herstellung der erfindungsgemäßen Schäume wurden das EPIC-Harz aus A) und das PHOSPHAT (siehe Tabelle 1) mittels eines Schnellrührers für 2 Minuten mit Luft beladen. Unter weiterem Rühren wurde zuerst das ADDITIV lund anschließend das TREIBMITTEL zugegeben und die Reaktionsmischung für weitere 10 s innig vermischt. Die Reaktionsmischung wurde in eine quadratische Papierform (20 cm x20 cm x14 cm) gegossen und stehen gelassen zum Aufschäumen. Anschließend wurde der Schaum für 3 Stunden bei 200°C getempert.

C) Allgemeine Beschreibung der Herstellung der Schäume 5 und 6 aus Tabelle 1:

Das EPIC-Harz aus Beispiel 1 wurde mittels eines Schnellrührers für 2 Minuten mit Luft beladen. Unter weiterem Rühren wurde zuerst das ADDITIV lund anschließend das TREIBMITTEL zugegeben und die Reaktionsmischung für weitere 10 s innig vermischt. Die Reaktionsmischung wurde in eine quadratische Papierform (20 cm x20 cm x14 cm) gegossen und stehen gelassen zum Aufschäumen.

Schaum 5 wurde für anschließend für 3 Stunden bei 200°C getempert.

Schaum 6 wurde nicht getempert.

Tabelle 1: Zusammensetzung und Eigenschaften der Schäume 1 - 6

| Schaum | | 1 | 2 | 3 | 4 | 5 | 6 |
|---|---|---|---|---|---|---|---|
| | EPIC- Harz A (Gew.-Teile) | 400 | 400 | 400 | 400 | 400 | 400 |
| PHOSPHAT | TCPP (Gew.-Teile) | 77 | | | | | |
| | DPK (Gew.-Teile) | | 75 | | 75 | | |
| | TKP (Gew.-Teile) | | | 75 | | | |
| ADDITIV-1 | | 28,6 | 27,7 | 28,8 | 27,7 | 27,7 | 27,7 |
| TREIBMITTEL | Treibmittel 1 (Gew.-Teile) | 6 | 6 | 6 | | 6 | 6 |
| | Treibmittel 2 (Gew.-Teile) | | | | 60 | | |
| Dichte (kg/m$^3$) | | 44 | 39 | 43 | 31 | 38 | 39 |
| NCO Umsatz (Gew.-%) | | 98,7 | 98,5 | 98,5 | 97,7 | 95,8 | 90 |
| Druckfestigkeit (kPa) | | 277 | 231 | 255 | 80 | 246 | 306 |
| MARHE (kW/m$^2$) | | 101 | 86 | 92 | 93 | 104 | 129 |

**Patentansprüche**

1. Hochtemperaturbeständiger Schaumstoff mit < 10 Gew.-% Carbodiimidstruktur**en**, erhältlich durch ein Verfahren bei dem man a) ein aromatisches Polyisocyanat mit b) mindestens einer, mindestens zwei Epoxidgruppen aufweisenden aromatischen Verbindung, c) mindestens einem, die Isocyanat/Epoxid-Reaktion beschleunigenden Katalysator, f) chemischen und/oder physikalischen Treibmitteln und e) Hilfs- und/oder Zusatzstoffen zu einer Reaktionsmischung vermischt, wobei das Äquivalentverhältnis von Isocyanatgruppen zu Epoxidgruppen von 1,2 : 1 bis 500 : 1 ist und man die Reaktionsmischung zum Schaumstoff umsetzt, **dadurch gekennzeichnet,**
**dass** die Hilfs- und/oder Zusatzstoffe e) mindestens e1) ein bei 60 °C und 1 bar flüssiges Phosphat umfassen und optional mehrfunktionelle Hydroxyl- oder Aminogruppenhaltige
Verbindungen e2) enthalten,
wobei die Menge der Komponente a) so bemessen ist, dass das Äquivalentverhältnis von Isocyanatgruppen der Komponente a) zur Summe der Epoxidgruppen der Komponente b), Hydroxylgruppen und/oder Aminogruppen der Komponente e2) und den gegebenenfalls in der Komponente b) vorliegenden Hydroxylgruppen mindestens bei 1,2 : 1 liegt, und dass die chemischen und/oder physikalischen Treibmittel f) mindestens eine Carbonsäure ausgewählt aus Ameisensäure und Essigsäure enthalten oder dass das Treibmittel f) aus Wasser und optional einer oder mehreren Verbindung(en) ausgewählt aus der Gruppe enthaltend Kohlenwasserstoffe, Fluor-Kohlenstoffe und Fluor-Kohlenwasserstoffe besteht, und
**dass** als Komponente b) eine oder mehrere Verbindungen ausgewählt aus der Gruppe bestehend aus den Polyglycidylethern von Bisphenol A, Polyglycidylethern von Bisphenol F, Polyglycidylethern von Novolaken und Polyepoxidverbindungen auf der Basis von aromatischen Aminen eingesetzt wird.

2. Hochtemperaturbeständige Schaumstoffe gemäß Anspruch 1, **dadurch gekennzeichnet, dass** die Treibmittel f) mindestens eine Carbonsäure ausgewählt aus Ameisensäure und Essigsäure enthalten.

3. Hochtemperaturbeständige Schaumstoffe gemäß Anspruch 1, **dadurch gekennzeichnet, dass** die Umsetzung in Gegenwart d) eines Stabilisators aus der Gruppe bestehend aus organischen Sulfonsäureestern, Methyljodid, Dimethylsulfat, Benzolsulfonsäureanhydrid, Benzolsulfonsäurechlorid, Benzolsulfonsäure, Trimethylsilyltrifluormethansulfonat, dem Reaktionsprodukt der Umsetzung von Benzolsulfonsäure mit Epoxiden sowie Mischungen daraus erfolgt.

4. Hochtemperaturbeständige Schaumstoffe gemäß Anspruch 2, **dadurch gekennzeichnet, dass** die Treibmittel f) aus Ameisensäure bestehen.

5. Verfahren zur Herstellung hochtemperaturbeständiger Schaumstoffe mit < 10 Gew.-% Carbodiimidstrukturen durch Umsetzung von

a) mindestens einem aromatischen Polyisocyanat mit
b) mindestens einer, mindestens zwei Epoxidgruppen aufweisenden aromatischen Verbindung in einer solchen Menge, die einem Äquivalentverhältnis von Isocyanatgruppen zu Epoxidgruppen von 1,2 : 1 bis 500 : 1 entspricht,
e) in Gegenwart von Hilfs- und Zusatzstoffen,

**dadurch gekennzeichnet, dass**
die Hilfs- und/oder Zusatzstoffe e) mindestens ein e1) bei 60 °C und 1 bar flüssiges Phosphat umfassen und optional mehrfunktionelle Hydroxyl- oder Aminogruppenhaltige Verbindungen e2) enthalten,
wobei die Menge der Komponente a) so bemessen ist, dass das Äquivalentverhältnis von Isocyanatgruppen der Komponente a) zur Summe der Epoxidgruppen der Komponente b), Hydroxylgruppen und/oder Aminogruppen der Komponente e2) und den gegebenenfalls in der Komponente b) vorliegenden Hydroxylgruppen mindestens bei 1,2 : 1 liegt,
und dass die Umsetzung in Gegenwart
von chemischen und/oder physikalischen Treibmitteln f), welche mindestens eine Carbonsäure ausgewählt aus Ameisensäure und Essigsäure enthalten oder aus Wasser und optional einer oder mehreren Verbindung(en) ausgewählt aus der Gruppe enthaltend Kohlenwasserstoffe, Fluor-Kohlenstoffe und Fluor-Kohlenwasserstoffe bestehen,
und einem die Isocyanat/Epoxid-Reaktion beschleunigenden Katalysator c) unter Aufschäumen durchgeführt wird, und
dass als Komponente b) eine oder mehrere Verbindungen ausgewählt aus der Gruppe bestehend aus den Polyglycidylethern von Bisphenol A, Polyglycidylethern von Bisphenol F, Polyglycidylethern von Novolaken und Polyepoxidverbindungen auf der Basis von aromatischen Aminen eingesetzt wird.

6. Verfahren gemäß Anspruch 5 zur Herstellung hochtemperaturbeständiger Schaumstoffe, **dadurch gekennzeichnet, dass** die Umsetzung in Gegenwart d) eines Stabilisators aus der Gruppe bestehend aus organischen Sulfonsäureestern, Methyljodid, Dimethylsulfat, Benzolsulfonsäureanhydrid, BenzolsulfonsäureChlorid, Benzolsulfonsäure, Trimethylsilyltrifluormethansulfonat, dem Reaktionsprodukt der Umsetzung von Benzolsulfonsäure mit Epoxiden sowie Mischungen daraus durchgeführt wird.

7. Verfahren gemäß Anspruch 5 oder 6 zur Herstellung hochtemperaturbeständiger Schaumstoffe durch

(i) Reaktion von

a) mindestens einem aromatischen Polyisocyanat in Gegenwart
c) eines tertiären Amins als Katalysator zu einem Isocyanuratgruppen aufweisenden Zwischenprodukt, und

(ii) Abbruch der Reaktion unter Schritt (i) bei einer Umsetzung von maximal 60% der Isocyanatgruppen des Isocyanats a) durch Zugabe einer der Aminmenge c) mindestens äquivalenten Menge d) eines Stabilisators aus der Gruppe bestehend aus organischen Sulfonsäureestern, Methyljodid, Dimethylsulfat, Benzolsulfonsäureanhydrid, Benzolsulfonsäurechlorid, Benzolsulfonsäure, Trimethylsilyltrifluormethansulfonat, dem Reaktionsprodukt der Umsetzung von Benzolsulfonsäure mit Epoxiden sowie Mischungen daraus, und
(iii) Mischen des unter (ii) erhaltenen Produktes mit

b) mindestens einer, mindestens zwei Epoxidgruppen aufweisenden aromatischen Verbindung in einer solchen Menge, die einem Äquivalentverhältnis von anfänglich eingesetzten Isocyanatgruppen zu Epoxidgruppen von 1,2 : 1 bis 500 : 1 entspricht,
e) in Gegenwart von Hilfs- und Zusatzstoffen

**dadurch gekennzeichnet, dass** die unter (iii) erhaltene Mischung durch
(iv) Zugabe von Treibmittel f), welches mindestens eine Carbonsäure ausgewählt aus Ameisensäure und Essigsäure enthält oder aus Wasser und optional einer oder mehreren Verbindung(en) ausgewählt aus der Gruppe enthaltend Kohlenwasserstoffe, Fluor-Kohlenstoffe und Fluor-Kohlenwasserstoffe besteht, und mindestens einem bei 60 °C und 1 bar flüssigen Phosphat e1) und einem die Isocyanat/Epoxid-Reaktion beschleunigenden Katalysator c2) unter Aufschäumen in den geschäumten Zustand überführt wird.

8. Verfahren gemäß Anspruch 5 oder 6 zur Herstellung hochtemperaturbeständiger Schaumstoffe durch

(i) Mischen von

a) mindestens einem aromatischen Polyisocyanat und
b) mindestens einer, mindestens zwei Epoxidgruppen aufweisenden aromatischen Verbindung in einer solchen Menge, die einem Äquivalentverhältnis von Isocyanatgruppen zu Epoxidgruppen von 1,2 : 1 bis 500 : 1 entspricht,

(ii) Reaktion der Mischung durch Zugabe
c1) eines tertiären Amins als Katalysator zu einem Zwischenprodukt, und
(iii) Abbruch der Reaktion bei einer Umsetzung von maximal 60% der Isocyanatgruppen des Isocyanats a) durch Zugabe einer der Aminmenge c1) mindestens äquivalenten Menge d) eines Stabilisators aus der Gruppe bestehend aus organischen Sulfonsäureestern, Methyljodid, Dimethylsulfat, Benzolsulfonsäureanhydrid, Benzolsulfonsäurechlorid, Benzolsulfonsäure, Trimethylsilyltrifluormethansulfonat, dem Reaktionsprodukt der Umsetzung von Benzolsulfonsäure mit Epoxiden sowie Mischungen daraus, so dass ein intermediärer stabiler B-Zustand des Viskositätsbereichs von 1500 bis 20000 mPas bei 25°C erhalten wird, gemessen nach DIN 53019,
e) in Gegenwart von Hilfs- und Zusatzstoffen,

**dadurch gekennzeichnet, dass** die unter (iii) erhaltene Mischung durch Zugabe von Treibmittel f), welches mindestens eine Carbonsäure ausgewählt aus Ameisensäure und Essigsäure enthält oder aus Wasser und optional einer oder mehreren Verbindung(en) ausgewählt aus der Gruppe enthaltend Kohlenwasserstoffe, Fluor-Kohlenstoffe und Fluor-Kohlenwasserstoffe besteht,
und mindestens einem bei 60 °C und 1 bar flüssigen Phosphat e1)
und einem die Isocyanat/Epoxid-Reaktion beschleunigenden Katalysator c2) unter Aufschäumen in den geschäumten Zustand überführt wird.

9. Verfahren gemäß einem der Ansprüche 5 bis 8, **dadurch gekennzeichnet, dass** die Treibmittel f) mindestens eine Carbonsäure ausgewählt aus Ameisensäure und Essigsäure enthalten.

10. Verfahren gemäß einem der Ansprüche 5 bis 9, **dadurch gekennzeichnet, dass** nach dem Aufschäumen in den geschäumten Zustand eine nachträgliche Temperaturbehandlung zwischen 70 und 250°C vorgenommen wird.

11. Verwendung der hochtemperaturbeständigen Schaumstoffe gemäß einem der Ansprüche 1 bis 3 als Füllschaum für Hohlräume, als Füllschaum zur Elektroisolierung, als Kern von Sandwich-Konstruktionen, zur Herstellung von Konstruktionsmaterialien für Innen- und Außenanwendungen jeglicher Art, zur Herstellung von Konstruktionsmaterialien für den Fahrzeug-, Schiff-, Flugzeug- und Raketenbau, zur Herstellung von Flugzeuginnen- und -außenbauteilen, zur Herstellung von Dämmmaterialien jeglicher Art, zur Herstellung von Dämmplatten, Rohr- und Behälterisolierungen, zur Herstellung von schallabsorbierenden Materialien, zum Einsatz in Motorräumen, zur Herstellung von Schleifscheiben und zur Herstellung von Hochtemperaturisolierungen und schwer entflammbaren Isolierungen.

12. Verwendung der schaumfähigen Mischungen vor dem Ende der Verschäumung zum hochtemperaturbeständigen Schaumstoff gemäß einem der Ansprüche 1 bis 3 zum Verkleben von Substraten, z.B. Stahl-, Aluminium- und Kupferblechen, und Kunststoffplatten, z.B. Polybutylenterephthalat-Platten.

13. Hohlräume, Elektroisolierungen, Kerne von Sandwich-Konstruktionen, Sandwich-Konstruktionen, Konstruktionsmaterialien für Innen- und Außenanwendungen jeglicher Art, Konstruktionsmaterialien für den Fahrzeug-, Schiff-, Flugzeug- und Raketenbau, Flugzeuginnen- und -außenbauteile, Dämmmaterialien jeglicher Art, Dämmplatten, Rohr- und Behälterisolierungen, schallabsorbierende Materialien, Dämm- und Isoliermaterialien in Motorräumen, Schleifscheiben, Hochtemperaturisolierungen und schwer entflammbare Isolierungen, **dadurch gekennzeichnet, dass** sie die hochtemperaturbeständigen Schaumstoffe gemäß einem der Ansprüche 1 bis 3 enthalten oder aus ihnen bestehen.

14. Verklebungen von Substraten, insbesondere Verklebungen von Stahl- und Kupferblechen und Kunststoffplatten, insbesondere Polybutylenterephthalat-Platten, **dadurch gekennzeichnet, dass** sie die hochtemperaturbeständigen Schaumstoffe gemäß einem der Ansprüche 1 bis 3 enthalten oder aus ihnen bestehen.

## Claims

1. A high-temperature resistant foam with < 10% by weight of carbodiimide structures, obtainable by a process in which a) an aromatic polyisocyanate is mixed with b) at least one aromatic compound having at least two epoxy groups, c) at least one catalyst accelerating the isocyanate/epoxide reaction, f) chemical and/or physical blowing agents, and e) auxiliary agents and/or additives, to form a reaction mixture, wherein the equivalent ratio of isocyanate groups to epoxy groups is from 1.2:1 to 500:1, and the reaction mixture is reacted into a foam, **characterized in that** said auxiliary agents and/or additives e) include at least one e1) phosphate liquid at 60 °C and under 1 bar, and optionally contain multifunctional compounds containing hydroxy or amino groups e2), wherein the amount of component a) is such that the equivalent ratio of isocyanate groups of component a) to the total of the epoxy groups of component b), hydroxy groups and/or amino groups of component e2) and the hydroxy groups that may be present in component b) is at least 1,2:1, and that said chemical and/or physical blowing agents f) include at least one carboxylic acid selected from formic acid and acetic acid, or that said blowing agent f) consists of water and optionally one or more compounds selected from the group containing hydrocarbons, fluorocarbons, and fluorohydrocarbons; and that one or more compounds selected from the group consisting of the polyglycidyl ethers of bisphenol A, the polyglycidyl ethers of bisphenol F, polyglycidyl ethers of novolacs and polyepoxy compounds based on aromatic amines are employed as component b).

2. High-temperature resistant foams according to claim 1, **characterized in that** said blowing agents f) include at least one carboxylic acid selected from formic acid and acetic acid.

3. High-temperature resistant foams according to claim 1, **characterized in that** the reaction is effected in the presence of d) a stabilizer selected from the group consisting of organic sulfonic acid esters, methyl iodide, dimethyl sulfate, benzenesulfonic acid anhydride, benzenesulfonic acid chloride, benzenesulfonic acid, trimethylsilyltrifluoromethane sulfonate, the reaction product of benzenesulfonic acid with epoxides, and mixtures thereof.

4. High-temperature resistant foams according to claim 2, **characterized in that** said blowing agents f) consist of formic acid.

5. A process for preparing high-temperature resistant foams with < 10% by weight of carbodiimide structures by reacting

   a) at least one aromatic polyisocyanate with
   b) at least one aromatic compound having at least two epoxy groups in an amount that corresponds to an equivalent ratio of isocyanate groups to epoxy groups of from 1.2:1 to 500:1,
   e) in the presence of auxiliary agents and additives,

   **characterized in that**
   said auxiliary agents and/or additives e) include at least one e1) phosphate liquid at 60 °C and under 1 bar, and optionally contain multifunctional compounds containing hydroxy or amino groups e2), wherein the amount of component a) is such that the equivalent ratio of isocyanate groups of component a) to the total of the epoxy groups of component b), hydroxy groups and/or amino groups of component e2) and the hydroxy groups that may be present in component b) is at lerast 1,2:1,

that the reaction is performed in the presence of
chemical and/or physical blowing agents f), which include at least one carboxylic acid selected from formic acid and acetic acid, or consist of water and optionally one or more compounds selected from the group containing hydrocarbons, fluorocarbons, and fluorohydrocarbons,
and a catalyst accelerating the isocyanate/epoxide reaction c) with foaming; and
that one or more compounds selected from the group consisting of the polyglycidyl ethers of bisphenol A, the polyglycidyl ethers of bisphenol F, polyglycidyl ethers of novolacs and polyepoxy compounds based on aromatic amines are employed as component b).

6. The process according to claim 5 for preparing high-temperature resistant foams, **characterized in that** the reaction is effected in the presence of d) a stabilizer selected from the group consisting of organic sulfonic acid esters, methyl iodide, dimethyl sulfate, benzenesulfonic acid anhydride, benzenesulfonic acid chloride, benzenesulfonic acid, trimethylsilyltrifluoromethane sulfonate, the reaction product of benzenesulfonic acid with epoxides, and mixtures thereof.

7. The process according to claim 5 or 6 for preparing high-temperature resistant foams by

(i) the reaction of

a) at least one aromatic polyisocyanate in the presence of
c) a tertiary amine as a catalyst to form an intermediate containing isocyanurate groups; and

(ii) quenching the reaction under step (i) at a conversion rate of at most 60% of the isocyanate groups of isocyanate a) by the addition of an amount that is at least equivalent to the amount of amine c) of d) a stabilizer selected from the group consisting of organic sulfonic acid esters, methyl iodide, dimethyl sulfate, benzenesulfonic acid anhydride, benzenesulfonic acid chloride, benzenesulfonic acid, trimethylsilyltrifluoromethane sulfonate, the reaction product of benzenesulfonic acid with epoxides, and mixtures thereof; and
(iii) mixing the product obtained under (ii) with

b) at least one aromatic compound having at least two epoxy groups in an amount that corresponds to an equivalent ratio of initially employed isocyanate groups to epoxy groups of from 1.2:1 to 500:1,
e) in the presence of auxiliary agents and/or additives;

**characterized in that** the mixture obtained under (iii) is converted to the foamed state under foaming by
(iv) the addition of a blowing agent f), which includes at least one carboxylic acid selected from formic acid and acetic acid, or consists of water and optionally one or more compounds selected from the group containing hydrocarbons, fluorocarbons, and fluorohydrocarbons;

and at least one phosphate e1) that is liquid at 60 °C and under 1 bar;
and a catalyst accelerating the isocyanate/epoxide reaction c2).

8. The process according to claim 5 or 6 for preparing high-temperature resistant foams by

(i) mixing of

a) at least one aromatic polyisocyanate, and
b) at least one aromatic compound having at least two epoxy groups in an amount that corresponds to an equivalent ratio of isocyanate groups to epoxy groups of from 1.2:1 to 500:1,

(ii) reacting the mixture by adding
c1) a tertiary amine as a catalyst to form an intermediate product; and
(iii) quenching the reaction at a conversion rate of at most 60% of the isocyanate groups of isocyanate a) by the addition of an amount that is at least equivalent to the amount of amine c1) of d) a stabilizer selected from the group consisting of organic sulfonic acid esters, methyl iodide, dimethyl sulfate, benzenesulfonic acid anhydride, benzenesulfonic acid chloride, benzenesulfonic acid, trimethylsilyltrifluoromethane sulfonate, the reaction product of benzenesulfonic acid with epoxides, and mixtures thereof, to obtain an intermediate stable B state of the viscosity range of from 1500 to 20,000 mPa·s at 25 °C as measured according to DIN 53019;

e) in the presence of auxiliary agents and/or additives;

**characterized in that** the mixture obtained under (iii) is converted to the foamed state under foaming by the addition of a blowing agent f), which includes at least one carboxylic acid selected from formic acid and acetic acid, or consists of water and optionally one or more compounds selected from the group containing hydrocarbons, fluorocarbons, and fluorohydrocarbons;

and at least one phosphate e1) that is liquid at 60 °C and under 1 bar;

and a catalyst accelerating the isocyanate/epoxide reaction c2).

9. The process according to any of claims 5-8, **characterized in that** said blowing agents f) include at least one carboxylic acid selected from formic acid and acetic acid.

10. The process according to any of claims 5-9, **characterized in that**, after the foaming to the foamed state, a subsequent temperature treatment at from 70 to 250 °C is performed.

11. Use of the high-temperature resistant foams according to any of claims 1-3 as a as a filling foam for hollow spaces, as a filling foam for electric insulation, as a core of sandwich constructions, for the preparation of construction materials for all kinds of interior and exterior applications, for the preparation of construction materials for vehicle, ship, airplane and rocket construction, for the preparation of airplane interior and exterior construction parts, for the preparation of all kinds of insulation materials, for the preparation of insulation plates, tube and container insulations, for the preparation of sound-absorbing materials, for use in engine compartments, for the preparation of grinding wheels, and for the preparation of high-temperature insulations and hardly flammable insulations.

12. Use of the foamable mixtures before the end of the foaming to form the foam having high temperature resistance according to any of claims 1 to 3 for adhesively bonding substrates, for adhesively bonding steel, aluminum and copper plates, plastic sheets, and polybutylene terephthalate sheets.

13. Hollow spaces, electric insulations, cores of sandwich constructions, sandwich constructions, construction materials for all kinds of interior and exterior applications, construction materials for vehicle, ship, airplane and rocket construction, airplane interior and exterior construction parts, all kinds of insulation materials, insulation plates, tube and container insulations, sound-absorbing materials, damping and insulation materials in engine compartments, grinding wheels, high-temperature insulations, and hardly flammable insulations, **characterized by** containing or consisting of the high-temperature resistant foams according to any of claims 1 to 3.

14. Bondings between substrates, bondings between steel and copper plates, and plastic sheets, especially polybutylene terephthalate sheets, **characterized by** containing or consisting of the high-temperature resistant foams according to any of claims 1 to 3.

**Revendications**

1. Mousse plastique résistante à haute température et comprenant < 10 % en poids de structures carbodiimide, pouvant être obtenue par un procédé dans lequel on mélange a) un polyisocyanate aromatique avec b) au moins un composé aromatique ayant au moins deux groupes époxydes, c) au moins un catalyseur accélérant la réaction isocyanate/époxyde, f) agents d'expansion chimiques et/ou physiques, et e) auxiliaires et additifs, pour former un mélange de réaction, dans laquelle le rapport d'équivalent de groupes isocyanates à groupes époxydes est 1,2 : 1 à 500 : 1, et l'on fait réagir ledit mélange de réaction pour former une mousse plastique, **caractérisée en ce que** lesdits auxiliaires et/ou additifs comprennent au moins un e1) phosphate liquide à 60 °C et 1 bar, et contiennent éventuellement des composés multifonctionnels contenant des groupes hydroxy ou amino e2), dans laquelle la quantité du composant a) est telle que le rapport d'équivalent de groupes isocyanates du composant a) à la somme des groupes époxydes du composant b), des groupes hydroxy et/ou amino du composant e2) et des groupes hydroxy éventuellement présents dans le composant b) est au moins 1,2 : 1, et que lesdits agents d'expansion chimiques et/ou physiques f) contiennent au moins un acide carboxylique choisi parmi l'acide formique et l'acide acétique, ou que ledit agent d'expansion consiste en eau et éventuellement un ou plusieurs composés choisis dans le groupe consistant en hydrocarbures, fluorocarbures et hydrocarbures fluorés, et ledit composé organique b) contient un ou plusieurs composés choisis dans le groupe consistant en les polyglycidyléthers de bisphénol A, les polyglycidyléthers de bisphénol F, les polyglycidyléthers de novolaque, et des composés polyépoxyde basés sur amines aromatiques.

**2.** Mousses plastiques résistantes à haute température selon la revendication 1, **caractérisées en ce que** lesdits agents d'expansion f) contiennent au moins un acide carboxylique choisi parmi l'acide formique et l'acide acétique.

**3.** Mousses plastiques résistantes à haute température selon la revendication 1, **caractérisées en ce que** ladite réaction est effectuée en présence de d) un stabilisateur choisi dans le groupe consistant en esters d'acides sulfoniques organiques, iodure de méthyle, sulfate de diméthyle, anhydride benzènesulfonique, chlorure d'acide benzènesulfonique, acide benzènesulfonique, triméthylsilyltrifluorométhanesulfonate, le produit de la réaction de l'acide benzènesulfonique avec des époxydes, et des mélanges de ceux-ci.

**4.** Mousses plastiques résistantes à haute température selon la revendication 2, **caractérisées en ce que** lesdits agents d'expansion f) consistent en acide formique.

**5.** Procédé pour préparer des mousses plastiques résistantes à haute température et comprenant < 10 % en poids de structures carbodiimide, par la réaction entre

> a) au moins un polyisocyanate aromatique, et
> b) au moins un composé aromatique ayant au moins deux groupes époxydes en une quantité qui correspond à un rapport d'équivalent de groupes isocyanates à groupes époxydes de 1,2 : 1 à 500 : 1,
> e) en présence d'auxiliaires et d'additifs,

**caractérisé en ce que** lesdits auxiliaires et/ou additifs comprennent au moins un e1) phosphate liquide à 60 °C et 1 bar, et
contiennent éventuellement des composés multifonctionnels contenant des groupes hydroxy ou amino e2),
dans laquelle la quantité du composant a) est telle que le rapport d'équivalent de groupes isocyanates du composant a) à la somme des groupes époxydes du composant b), des groupes hydroxy et/ou amino du composant e2) et des groupes hydroxy éventuellement présents dans le composant b) est au moins 1,2 : 1, et
ladite réaction est effectuée en présence
d'agents d'expansion chimiques et/ou physiques f) contenant au moins un acide carboxylique choisi parmi l'acide formique et l'acide acétique, ou consistant en eau et éventuellement un ou plusieurs composés choisis dans le groupe consistant en hydrocarbures, fluorocarbures et hydrocarbures fluorés, et
un catalyseur accélérant la réaction isocyanate/époxyde c),
avec moussage, et
un ou plusieurs composés choisis dans le groupe consistant en les polyglycidyléthers de bisphénol A, les polyglycidyléthers de bisphénol F, les polyglycidyléthers de novolaque, et des composés polyépoxyde basés sur amines aromatiques sont utilisés comme composant b).

**6.** Procédé selon la revendication 5 pour préparer des mousses plastiques résistantes à haute température, **caractérisé en ce que** ladite réaction est effectuée en présence de d) un stabilisateur choisi dans le groupe consistant en esters d'acides sulfoniques organiques, iodure de méthyle, sulfate de diméthyle, anhydride benzènesulfonique, chlorure d'acide benzènesulfonique, acide benzènesulfonique, triméthylsilyltrifluorométhanesulfonate, le produit de la réaction de l'acide benzènesulfonique avec des époxydes, et des mélanges de ceux-ci.

**7.** Procédé selon la revendication 5 ou 6 pour préparer des mousses plastiques résistantes à haute température par

> (i) la réaction

>> a) d'au moins un polyisocyanate aromatique en présence
>> c) d'une amine tertiaire en tant que catalyseur pour former un produit intermédiaire contenant des groupes isocyanurate, et

> (ii) arrêt de la réaction de l'étape (i) à une conversion d'au plus 60 % des groupes isocyanate de l'isocyanate a), en ajoutant une quantité d) au moins équivalente à la quantité d'amine c) d'un stabilisateur choisi dans le groupe consistant en esters d'acides sulfoniques organiques, iodure de méthyle, sulfate de diméthyle, anhydride benzènesulfonique, chlorure d'acide benzènesulfonique, acide benzènesulfonique, triméthylsilyltrifluorométhanesulfonate, le produit de la réaction de l'acide benzènesulfonique avec des époxydes, et des mélanges de ceux-ci, et
> (iii) mélange du produit obtenu dans l'étape (ii) avec

b) au moins un composé aromatique ayant au moins deux groupes époxydes en une quantité qui correspond à un rapport d'équivalent de groupes isocyanates à groupes époxydes de 1,2 : 1 à 500 : 1,

e) en présence d'auxiliaires et d'additifs,

**caractérisé en ce que** le mélange obtenu dans l'étape (iii) est transféré dans l'état moussé par moussage (iv) en ajoutant un agent d'expansion f) contenant au moins un acide carboxylique choisi parmi l'acide formique et l'acide acétique, ou consistant en eau et éventuellement un ou plusieurs composés choisis dans le groupe consistant en hydrocarbures, fluorocarbures et hydrocarbures fluorés, et

au moins un phosphate liquide à 60 °C et 1 bar e1), et
un catalyseur accélérant la réaction isocyanate/époxyde c2).

8. Procédé selon la revendication 5 ou 6 pour préparer des mousses plastiques résistantes à haute température par

(i) mélange

a) d'au moins un polyisocyanate aromatique et
b) au moins un composé aromatique ayant au moins deux groupes époxydes en une quantité qui correspond à un rapport d'équivalent de groupes isocyanates à groupes époxydes de 1,2 : 1 à 500 : 1,

(ii) réaction du mélange en ajoutant
c1) une amine tertiaire en tant que catalyseur pour former un produit intermédiaire, et
(iii) arrêt de la réaction à une conversion d'au plus 60 % des groupes isocyanate de l'isocyanate a), en ajoutant une quantité d) au moins équivalente à la quantité d'amine c) d'un stabilisateur choisi dans le groupe consistant en esters d'acides sulfoniques organiques, iodure de méthyle, sulfate de diméthyle, anhydride benzènesulfonique, chlorure d'acide benzènesulfonique, acide benzènesulfonique, triméthylsilyltrifluorométhanesulfonate, le produit de la réaction de l'acide benzènesulfonique avec des époxydes, et des mélanges de ceux-ci, pour obtenir un état B stable intermédiaire ayant une viscosité comprise dans la gamme de 1500 à 20000 mPas à 25 °C, mesurée selon DIN 53019,
e) en présence d'auxiliaires et d'additifs,

**caractérisé en ce que** le mélange obtenu dans l'étape (iii) est transféré dans l'état moussé par moussage en ajoutant un agent d'expansion f) contenant au moins un acide carboxylique choisi parmi l'acide formique et l'acide acétique, ou consistant en eau et éventuellement un ou plusieurs composés choisis dans le groupe consistant en hydrocarbures, fluorocarbures et hydrocarbures fluorés, et
au moins un phosphate liquide à 60 °C et 1 bar e1), et
un catalyseur accélérant la réaction isocyanate/époxyde c2).

9. Procédé selon l'une quelconque des revendications 5 à 8, **caractérisé en ce que** lesdits agents d'expansion f) contiennent au moins un acide carboxylique choisi parmi l'acide formique et l'acide acétique.

10. Procédé selon l'une quelconque des revendications 5 à 9, **caractérisé en ce qu'**après l'expansion dans l'état expansé, un traitement thermique ultérieur entre 70 et 250 °C est effectué.

11. Utilisation des mousses plastiques résistantes à haute température selon l'une quelconque des revendications 1 à 3 comme mousse de remplissage pour cavités, mousse de remplissage pour isolation électrique, comme âme de constructions sandwich, pour la production de matériaux de construction pour applications internes et externes de tout type, pour la production de matériaux de construction pour la construction de véhicules, navale, aéronautique et de fusées, pour la production d'éléments internes et externes d'avions, pour la production de matériaux isolants de tout type, pour la production de plaques isolantes, d'isolations de tubes et de récipients, pour la production de matériaux d'absorption du son, pour l'utilisation dans les compartiments moteur, pour la production de disques abrasifs, et pour la production d'isolations haute température et d'isolations difficilement inflammables.

12. Utilisation des mélanges expansibles avant la fin de l'expansion en mousse plastique résistante à haute température selon l'une quelconque des revendications 1 à 3 pour coller des substrats, notamment des tôles d'acier, d'aluminium et de cuivre et des plaques de plastique, par exemple des plaques de poly(téréphtalate de butylène).

13. Cavités, isolations électriques, âmes de constructions sandwich, constructions sandwich, matériaux de construction pour applications internes et externes de tout type, matériaux de construction pour la construction de véhicules, navale, aéronautique et de fusées, éléments internes et externes d'avions, matériaux isolants de tout type, plaques isolantes, isolations de tubes et de récipients, matériaux d'absorption du son, matériaux isolants utilisés dans les compartiments moteur, disques abrasifs, isolations haute température et isolations difficilement inflammables, **caractérisés en ce qu'**il contiennent ou consistent en les mousses plastiques résistantes à haute température selon l'une quelconque des revendications 1 à 3.

14. Collages de substrats, notamment collages de tôles d'acier et de cuivre et de plaques de plastique, notamment plaques de poly(téréphtalate de butylène), **caractérisés en ce qu'**il contiennent ou consistent en les mousses plastiques résistantes à haute température selon l'une quelconque des revendications 1 à 3.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3793236 A
- US 4129695 A
- US 3242108 A
- US 3849349 A
- DE 2551631
- EP 0331996 A
- EP 0272563 A
- DE 3938062 A1
- WO 201280185 A1
- WO 2012150201 A1
- GB 874430 A
- GB 848671 A
- US 3454606 A
- US 3277138 A
- US 3152162 A
- GB 994890 A
- US 3001973 A
- US 3394164 A
- US 3644457 A
- DE 1230778
- US 3124605 A
- US 3201372 A
- US 3654106 A
- US 3567763 A
- DE PS1072385 C
- US 3455883 A
- DE AS1923214 B
- US PS3277173 A
- DE OS1937685 A
- US PS3362979 A
- GB 1017612 A
- GB PS1024288 A
- GB PS772830 A
- GB 816923 A

**In der Beschreibung aufgeführte Nicht-Patentliteratur**

- **W. SIEFKEN.** *Justus Liebigs Annalen der Chemie,* vol. 562, 75-136
- *CHEMICAL ABSTRACTS,* 64-18-6